(19) Europäisches Patentamt
European Patent Office
Office européen des brevets

(11) Publication number: **0 331 841 B1**

(12) # EUROPEAN PATENT SPECIFICATION

(45) Date of publication of patent specification: **07.04.93**

(51) Int. Cl.5: **C09D 11/10**, C08G 18/67, C08G 18/69

(21) Application number: **88310995.1**

(22) Date of filing: **21.11.88**

(54) **Ultraviolet-curable ink.**

(30) Priority: **09.03.88 JP 53680/88**

(43) Date of publication of application:
**13.09.89 Bulletin 89/37**

(45) Publication of the grant of the patent:
**07.04.93 Bulletin 93/14**

(84) Designated Contracting States:
**BE CH DE FR GB IT LI NL**

(56) References cited:
**FR-A- 2 277 863**
**GB-A- 2 178 436**
**US-A- 4 056 453**

(73) Proprietor: **HAYAKAWA RUBBER COMPANY LIMITED**
**1-32, Matsuhama-cho 2-chome**
**Fukuyama City(JP)**

(72) Inventor: **Fujii, Toshihiro**
**545 Tsunoshita Daimon-Cho**
**Fukuyama City Hiroshima Pref.(JP)**
Inventor: **Nii, Hiroki**
**Ha97-9 Shingai-Cho**
**Fukuyama City Hiroshima Pref.(JP)**
Inventor: **Ikeda, Makoto**
**645-1 Minamiteshiro-Cho**
**Fukuyama City Hiroshima Pref.(JP)**
Inventor: **Etori, Masao**
**420-1 Kiyosuichiba Kiyosu-Cho**
**Nishikasugai-Gun Aichi Pref.(JP)**
Inventor: **Tanaka, Ban**
**75-10 Aoki-Cho 1-chome**
**Toyota City Aichi Pref.(JP)**

(74) Representative: **Ruffles, Graham Keith et al**
**MARKS & CLERK 57-60 Lincoln's Inn Fields**
**London WC2A 3LS (GB)**

EP 0 331 841 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to inks, particularly to ultraviolet (UV) curable inks for printing.

Many types of UV-curable ink are known, and which comprise a photo-oligomer, reactive diluent monomer, photo-initiator, photosensitiser, pigment, pigment dispersant, and other optional ingredients, such as flow adjusters, defoamers and levelling agents.

The known inks, when cured by UV irradiation, suffer from curing shrinkage so that adhesion deteriorates or is lost. Even when adhesion to the substrate is good, the substrate is frequently deformed, so that the cured ink loses conformability, and aging cracks may appear on standing, even with only a small impact of bending force.

The inks of the present invention do not suffer the above drawbacks and, in addition, possess superior adhesive properties and chemical resistance, and form stiff and tenacious coatings.

It has been discovered that the disadvantages of the prior art may be overcome by the inclusion of a UV-curable elastomeric copolymer in the ink. Such UV-curable copolymers have a high molecular weight and have a rubbery elastomer structure. It is generally desirable to further include a photopolymerisable monomer (photo-monomer) and/or a photopolymerisable oligomer (photo-oligomer) as a reactive diluent, and a photopolymerisation initiator (photo-initiator). The ink obtained is stiff and has good chemical resistance, low UV-curing shrinkage, as well as good post-cure elasticity and elongation.

The inks of the present invention are characterised in comprising a UV-curable rubbery copolymer having the general formula (I)

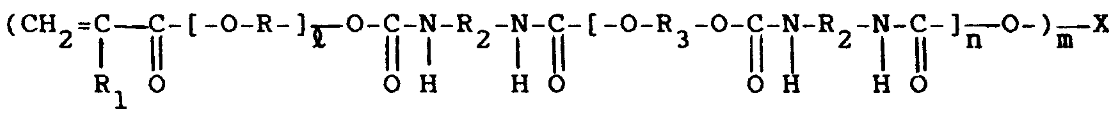

(I)

wherein R represents a $C_{2-8}$ alkylene group, $R_1$ represents H or $CH_3$, $R_2$ represents a diisocyanate residue, $R_3$ represents a residue of polyhydric alcohol having a molecular weight of up to 300, X is a moiety of dienic liquid rubber of 1,000 to 10,000 molecular weight and having one or more reactive hydroxyl groups, $\ell$ is an integer from 1-4, m is a number from $1.0<m<3.0$, and n is an integer from 1-12.

The amount of the compound of formula (I) used will vary according to requirements. Amounts of ingredients may also vary as required but, in general, can be specified in relation to the copolymer, taking 100 parts of the copolymer as a standard.

Thus, in a preferred aspect, the inks of the present invention further comprise, per 100 parts of copolymer, 50-500 parts of at least one kind of mono- or polyfunctional monomer; 0-300 parts of at least one kind of mono- or polyfunctional photopolymerisable oligomer; and 1-30 parts of a photopolymerisation initiator.

The UV-curable copolymer may be obtained by uniformly mixing and reacting: a dienic liquid rubber of 1,000-10,000 MW and having one or more reactive hydroxyl groups; a diisocyanate compound, a polyhydric, preferably dihydric, alcohol having a molecular weight of up to 300, and; a vinylic unsaturated monomer having at least one hydroxyl group.

Examples of suitable dienic liquid rubbers having a number average molecular weight of 1,000-10,000 include 1,2-polybutadiene, 1,4-polybutadiene, 1,2-pentadiene, styrene-butadiene copolymers, acrylonitrile-butadiene copolymers and polyisoprene, which have at least one hydroxyl group in the molecule. These may be used alone or in admixture.

The valence (m) of hydroxyl groups in the molecule is about $1.0<m<3.0$. If $m \leqq 1$, the resultant rubbery copolymer tends to have a low photopholymerisation density and the photocured product or ink can be rather brittle. If $m \geqq 3$, the photocured ink tends to be excessively hard and have poor elasticity.

Examples of suitable vinylic unsaturated monomers inlcude, for example, 2-hydroxyethylacrylate, 2-hydroxyethylmethacrylate, 2-hydroxypropylacrylate, 2-hydroxypropylmethacrylate and tripropyleneglycolmonomethacrylate, which may be used alone or in admixture.

Suitable dihydric alcohols include, for example, ethyleneglycol, diethyleneglycol, triethyleneglycol, 1,2-propyleneglycol, 1,3-propyleneglycol, 1,3-butanediol, 1,4-butanediol, 1,5-pentanediol, 1,6-hexanediol, dioxaneglycol (Trade Mark), trimethylolpropane-monoacrylate, trimethylolpropane-monoacrylate, trimethylolpropane-methacrylate and glycerol α-mono-allylether, which may be used alone or in admixture.

The components are advantageously mixed uniformly at a temperature preferably in the range of 40-70°C, more preferably at 50-60°C, in an inert atmosphere such as nitrogen, to obtain the rubbery copolymer of formula (I).

Suitable photopolymerisable monomers for use in the present invention include mono- or polyfunctional polymers, such as acrylic or methacrylic esters of $C_1$-$C_{12}$ alcohol having a side chain, for example methacrylate, methylmethacrylate, ethacrylate, ethylmethacrylate, butylacrylate, butylmethacrylate, 2-ethylhexylacrylate, 2-ethylhexylmethacrylate, laurylacrylate or laurylmethacrylate; polyolpolyacrylates or polyolpolymethacrylates, such as trimethylolpropanediacrylate, trimethylolpropanetriacrylate, trimethylolpropanetrimeth acrylate, neopentylglycoldiacrylate, or 1,6-hexanedioldimethacrylate; alkyl-substituted aminoalcohols or alkyl-substituted aminoalcoholmethacrylates, such as diethylaminoethylacrylate or diethylaminoethylmethacrylate; acrylamides or acrylimides, such as N-acryloylmorpholin; and N-vinyl-2-pyrrolidone, which may be used alone or in admixture.

The monomer(s) is mixed in an amount of 50-500 parts by weight with 100 parts by weight of the copolymer. If the amount of the photopolymerisable monomers is less than about 50 parts by weight, the viscosity of the ink will generally be too high. If the amount of the monomer exceeds 500 parts by weight, the desired rubbery elasticity of the ink may well not be attained.

Suitable optional photopolymerisable oligomers include epoxyacrylate series oligomers, polyesteracrylate series oligomers and urethaneacrylate series oligomers having at least 2 functionalities.

The photopolymerisable oligomer is mixed with the UV-curable copolymer in an amount of generally about 0-300 parts by weight, relative to 100 parts by weight of the rubbery copolymer. If the amount exceeds 300 parts by weight, elasticity of the ink may be impaired.

Many photopolymerisable monomers and oligomers, such as those listed above, are useful at low viscosity as photopolymerisable diluents.

Suitable photopolymerisation initiators include benzoin, benzoinalkylether, benzyldimethylketal, benzophenone, Michler's ketone, azoisobutyronitrile, 1-azobis-1-cyclohexanecarbonitrile, naphthalenesulphonylchlorides, anthraquinones, biimidazoles, or thioxanthones, which may be used alone or in admixture.

One or more of the initiators may be mixed with the copolymer generally in an amount of from about 1-30 parts by weight, relative to 100 parts by weight of the rubbery copolymer. If the amount of the initiator is less than 1 part by weight, the curing property of the ink is generally inferior. If the amount of the initiator exceeds 30 parts by weight, the cost of the ink is generally prohibitive.

Other components may optionally be used in the manufacture of inks according to the invention, such as sensitizers like tertiary amines, organic or inorganic pigments, pigment dispersants, flow adjusters affording suitable printability, defoamers, and levelling agents, as required.

Illustrative examples of sensitizers include 4-methylaminobenzoic acid isoamyl ester, and azidopyren, which may be used in an amount of 1-15 parts by weight relative to 100 parts by weight of copolymer.

Illustrative examples of pigment dispersants are polyamide, and salts of esters of polar acids and long chain polyaminoamides, which may be used in amounts of 0.1-4 parts by weight relative to 100 parts by weight of the rubbery copolymer.

Illustrative examples of flow adjusters are methylpolysiloxane, and modified acryl polymers, which may be used in an amount of 1-10 parts by weight relative to 100 parts by weight of the copolymer.

Illustrative examples of defoamers include hydrophobic polysiloxane/polyether copolymers, and compounds of dimethylpolysiloxane and silisic acid, which may be used in an amount of 1-10 parts by weight relative to 100 parts by weight of the copolymer.

Illustrative examples of levelling agents are polysiloxane/polyether copolymer, and modified organic polysiloxane, which may be used in an amount of 1-10 parts by weight relative to 100 parts by weight of the rubbery copolymer.

Pigments may be inorganic and/or organic, and may be used in an amount of 1-40 parts by weight relative to 100 parts by weight of the rubbery copolymer.

Mixing and dispersing may be effected by appropriate means such as a roller mill, to obtain a uniform UV-curable ink.

The UV-curable ink of the present invention adheres well to the substrate, shows no removal or peeling off from the join after stress, exhibits excellent conformability to the deformation of the substrate, and endures strong and rapid physical shocks, such as punching or bend processing of the substrate after printing.

The present invention will be illustrated in more detail with reference to the accompanying Examples, which are not to be construed as limiting on the present invention.

In the Examples, all quantitative measurements are by weight.

Examples 1-4

A UV-curable rubbery copolymer having the trade name of 12B-A or NU-A (photosensitive rubber "Mickelon UV" produced by Hayakawa Rubber Co.) was dissolved in N-vinyl-2-pyrrolidone (NVP - GAF Corp.) in the ratios shown in Table 1, added and mixed thoroughly with other raw materials, agitated, and blended twice on three rolls to obtain UV-curable inks.

The resulting inks were tested for screen printing, as follows.

Screen printing was effected by depicting a nega picture of an emulsion thickness of 10 µm on a 250 mesh screen made of tetron, and printing the picture on a polycarbonate resin sheet of 0.5mm thickness. The printed sheet was irradiated on a conveyer at a speed of 5 m/min with ultraviolet from 80 W/cm high pressure mercury vapor discharge lamps (such as type HMW 180 produced by Oak K.K.) at a distance of 120mm, to obtain a cured coating of a thickness of 8 µm. The cured coating on the sheet was used at a test sample. The test samples were tested for adhesion by a tessellate plastic tape-peeling test, flexibility and elongation by a 180° bending test, and wear-resistance by a nail scratch test. Results are shown in Table 1.

Reference Examples 1-2

The procedures of Example 1 were repeated using ingredients as shown in Table 1, except that urethane-acrylate oligomer (trade name "Aronix M-1200") was used instead of the photosensitive rubber (trade name "12B-A" or "NU-A"). Results are shown in Table 1.

As will be appreciated from the foregoing description, the UV-curable ink of the present invention comprises the UV-curable rubbery copolymer of formula (I), so that the ink exhibits low shrinkage at the time of UV curing, good adhesion to the substrate, excellent conformability to bending or elongation of even particularly flexible substrates, superior scratch resistant properties, tenacious and/or abrasion resistant properties, and remarkably good resistance to corrosive chemical substances, such as acids or caustic materials.

Although the present invention has been illustrated with specific Examples, it is of course apparent to those skilled in the art that various changes and modifications thereof are possible without departing from the broad spirit and aspect of the present invention as defined in the appended claims.

Table 1(a)

| Component | Example 1 | Example 2 | Example 3 | Example 4 | Reference Example 1 | Reference Example 2 |
|---|---|---|---|---|---|---|
| (1) Photosensible rubber (12B-A) | 100 | 100 | - | - | - | - |
| (2) Photosensible rubber (NU-A) | - | - | 100 | 100 | - | - |
| (3) Urethaneacrylate oligomer (Aronix M-1200) | - | - | - | - | 100 | 100 |
| (4) N-vinyl-2-pyrrolidone | 100 | 50 | 100 | 50 | 100 | 50 |
| (5) Ethylcarbitolacrylate | 50 | 100 | 50 | 100 | 50 | 100 |
| (6) Trimethylolpropanetriacrylate | 50 | 50 | 50 | 50 | 50 | 50 |
| (7) Benzyldimethylkethal | 15 | 15 | 15 | 15 | 15 | 15 |
| (8) Talc | 20 | 20 | 20 | 20 | 20 | 20 |
| (9) S-024 | 4 | 4 | 4 | 4 | 4 | 4 |
| (10) Phthalocyanine blue | 15 | 15 | 15 | 15 | 15 | 15 |
| (11) Antiterra U | 1 | 1 | 1 | 1 | 1 | 1 |
| Total | 370 | 370 | 370 | 370 | 370 | 370 |

## Table 1(b)

| Test | Example | | | | Reference Example | |
|---|---|---|---|---|---|---|
| | 1 | 2 | 3 | 4 | 1 | 2 |
| Tesselate plastic tape-peeling test | 100/100 | 100/100 | 100/100 | 100/100 | 20/100 | 30/100 |
| 180° bending test | 2 φ<br>good | 2 φ<br>good | 2 φ<br>good | 2 φ<br>good | 8 φ<br>cracked | 8 φ<br>deviation of coating from the sheet |
| Wear resistant property | good | good | good | good | peeled | damaged |

Notes:
(1) Mickelon UV, produced by Hayakawa Rubber Co. Ltd.
(2) Mickelon UV, produced by Hayakawa Rubber Co. Ltd.
(3) Produced by Toa Gosei Kagaku Kogyo
(4) NVP, produced by GAF Inc.
(5) EC-A, produced by Kyoeisha Yushi Company
(6) TMPTA,produced by Shin Nakamura Kagaku K.K.
(7) Irgacure 651, produced by CIBA Geigi Co.
(8) Mistron vapor talc, produced by Mistron Co.
(9) Pigment, produced by Dainichi Seika Co.
(10) Pigment dispersant, produced by BYK, Chemie Co.

## Claims

1. A UV-curable ink comprising a compound of formula (I)

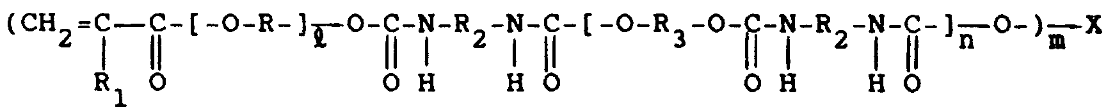

(I)

wherein R represents a $C_{2-8}$ alkylene group, $R_1$ represents H or $CH_3$, $R_2$ represents a diisocyanate residue, $R_3$ represents a residue of polyhydric alcohol having a molecular weight of up to 300, X is a moiety of dienic liquid rubber of 1,000 to 10,000 molecular weight and having one or more reactive hydroxyl groups, $\ell$ is an integer from 1-4, m is a number from $1.0<m<3.0$, and n is an integer from 1-12.

2. An ink according to claim 1 further comprising at least one mono- or polyfunctional monomer, and/or at least one mono- or polyfunctional photopolymerisable oligomer and a photopolymerisation initiator.

3. A UV-curable ink according to claim 1 or 2 comprising by weight; 100 parts of a UV-curable rubbery copolymer of formula (I); 50-500 parts of at least one kind of mono- or polyfunctional monomer; 0-300 parts of at least one kind of mono- or polyfunctional photopolymerisable oligomer; and 1-30 parts of a photopolymerisation initiator.

4. An ink according to any preceding claim wherein $R_3$ represents a residue of a dihydric alcohol.

5. An ink according to any preceding claim further comprising at least one of the following types of ingredient: pigment; pigment dispersant; flow adjuster; defoamer, and; levelling agent.

## Patentansprüche

1. UV-härtbare Tinte umfassend eine Verbindung der Formel (I)

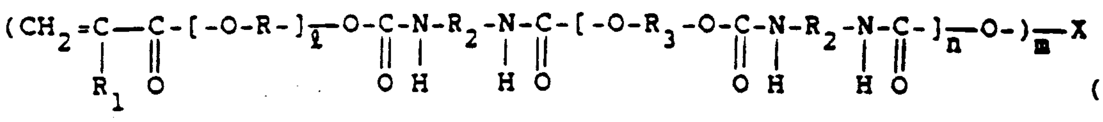

(I)

worin R eine $C_{2-8}$-Alkylengruppe bedeutet, $R_1$ H oder $CH_3$ bedeutet, $R_2$ einen Diisocyanatrest bedeutet, $R_3$ einen Rest eines mehrwertigen Alkohols mit einem Molekulargewicht von bis zu 300 bedeutet, X eine Komponente aus flüssigem Dienkautschuk mit einem Molekulargewicht von 1000 bis 10000 und einer oder mehreren reaktiven Hydroxylgruppen ist, 1 eine ganze Zahl von 1 bis 4 ist, m eine Zahl von $1{,}0 < m < 3{,}0$ ist und n eine ganze Zahl von 1 bis 12 ist.

2. Tinte nach Anspruch 1, welche ferner mindestens ein mono- oder polyfunktionelles Monomer und/oder mindestens ein mono- oder polyfunktionelles photopolymerisierbares Oligomer und einen Photopolymerisationsinitiator umfaßt.

3. UV-härtbare Tinte nach Anspruch 1 oder 2, welche umfaßt; 100 Gewichtsteile eines UV-härtbaren kautschukelastischen Copolymers der Formel (I); 50 bis 500 Gewichtsteile von mindestens einer Art von mono- oder polyfunktionellem Monomer; 0 bis 300 Gewichtsteile von mindestens einer Art von mono- oder polyfunktionellem photopolymerisierbaren Oligomer; und 1 bis 30 Gewichtsteile eines Photopolymerisationsinitiators.

**4.** Tinte nach einem der vorhergehenden Ansprüche, worin $R_3$ einen Rest von einem zweiwertigem Alkohol bedeutet.

**5.** Tinte nach einem der vorhergehenden Ansprüche, welche weiter mindestens eine der folgenden Arten von Bestandteilen umfaßt: Pigment; Pigmentdispergiermittel; Mittel zur Einstellung der Fließfähigkeit (flow adjuster); Entschäumer, und; Egalisiermittel.

**Revendications**

**1.** Encre durcissable par un rayonnement ultra-violet comprenant un composé de formule (I)

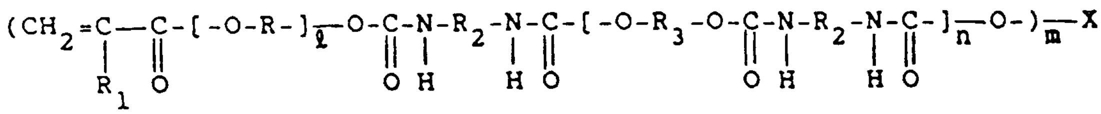

(I)

dans laquelle R représente un groupement alkylénique en $C_2$-$C_8$, $R_1$ représente H ou $CH_3$, $R_2$ représente un reste de diisocyanate, $R_3$ représente un reste d'un alcool polyvalent ayant un poids moléculaire allant jusque 300, X est un fragment de caoutchouc diénique liquide d'un poids moléculaire de 1.000 à 10.000 et ayant un ou plusieurs groupements hydroxy réactifs, l est un nombre entier de 1 à 4, m est un nombre de $1.0 < m < 3.0$ et n est un nombre entier de 1 à 12.

**2.** Encre selon la revendication 1 comprenant en outre au moins un monomère mono- ou poly-fonctionnel et/ou au moins un oligomère mono- ou polyfonctionnel photomérisable et un initiateur de photomérisation.

**3.** Encre durcissable par un rayonnement ultra-violet selon la revendication 1 ou 2 comprenant en poids: 100 parties d'un copolymère caoutchouteux durcissable par un rayonnement ultra-violet de formule (I); 50-500 parties d'au moins une sorte de monomère mono- ou polyfonctionnel; 0-300 parties d'au moins une sorte d'oligomère mono- ou polyfonctionnel photomérisable et 1-30 parties d'un initiateur de photopolymérisation.

**4.** Encre selon l'une quelconque des revendications précédentes dans laquelle $R_3$ représente un reste d'un alcool polyvalent.

**5.** Encre selon l'une quelconque des revendications précédentes comprenant en outre au moins un des types d'ingrédients suivants:
pigment; pigment dispersant; ajusteur d'écoulement; désémulsifiant et agent nivelant.